(19) Europäisches Patentamt / European Patent Office / Office européen des brevets

(11) **EP 4 389 473 A1**

(12) **DEMANDE DE BREVET EUROPEEN**

(43) Date de publication:
**26.06.2024 Bulletin 2024/26**

(21) Numéro de dépôt: **23218724.5**

(22) Date de dépôt: **20.12.2023**

(51) Classification Internationale des Brevets (IPC):
**B60G 21/055** *(2006.01)* **F16C 11/06** *(2006.01)*

(52) Classification Coopérative des Brevets (CPC):
**B60G 21/055; F16C 11/0695;** B60G 2204/1224;
B60G 2204/416; B60G 2206/427

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **22.12.2022 FR 2214291**

(71) Demandeur: **Renault s.a.s**
**92100 Boulogne Billancourt (FR)**

(72) Inventeurs:
• **BOURDIER, Céline**
**72000 LE MANS (FR)**
• **FROMENTIN, Pascal**
**78280 GUYANCOURT (FR)**

(54) **DISPOSITIF DE FIXATION D'UNE EXTRÉMITÉ D'UNE BARRE ANTI-DÉVERS À UN SYSTÈME DE SUSPENSION D'UN VÉHICULE, ET VÉHICULE ASSOCIÉ**

(57) Ce dispositif de fixation (19) d'une extrémité (17c) d'une barre anti-dévers (17) d'un véhicule (15) à un système de suspension (18) du véhicule, comprend une biellette (20) destinée à être connectée au système de suspension (18) et un moyen de fixation (21) de la biellette (20) à la barre anti-dévers (17), la biellette (20) comportant une extrémité équipée d'une rotule (21a), le moyen de fixation (21) comprenant un organe de raccord (23) fixé à la rotule (21a) et un insert de fixation (22) comportant un corps cylindrique (22b) s'étendant selon un axe (B) et une tête d'appui (22a) formée sur un bout du corps cylindrique (22b), la tête d'appui (22a) reposant contre l'extrémité (17c) de la barre anti-dévers (17) et le corps cylindrique (22b) étant inséré dans l'extrémité (17c) de la barre anti-dévers (17), l'insert de fixation (22) comprenant une partie interne (26) débouchant sur la tête d'appui (22a) et recevant une tige (29) de l'organe de raccord (23), le corps cylindrique (22b) comprenant une partie externe (24) en regard de l'intérieur (17e) de la barre anti-dévers (17), la partie externe (24) du corps cylindrique (22a) comprenant au moins une excroissance (25, 25a, 25b) s'étendant radialement pour être au contact de l'intérieur (17e) de la barre anti-dévers (17).

Fig 3

EP 4 389 473 A1

## Description

### Domaine technique

L'invention concerne, de manière générale, tout système comprenant un pivot de rotule à solidariser, et notamment un tel système évoluant dans un environnement vibratoire et sujet à des sollicitations alternées importantes et répétées.

L'invention concerne plus spécialement une barre anti-dévers pour véhicule automobile, et se rapporte plus particulièrement à un dispositif de fixation des extrémités de la barre anti-dévers à un système de suspension du véhicule

### Techniques antérieures

Depuis plusieurs dizaines d'années, les véhicules automobiles sont équipés d'au moins une barre anti-dévers, aussi appelée barre anti-roulis ou barre stabilisatrice, qui consiste en une pièce métallique, par exemple en acier, sensiblement en forme de U de section circulaire et qui permet de limiter l'inclinaison du véhicule dans les courbes ou dans les nids-de-poule. Un telle barre anti-dévers relie par chacune de ses extrémités l'un des deux systèmes de suspension d'un même train de roues du véhicule. Chaque extrémité de la barre anti-dévers est donc liée au système de suspension d'une des roues du même train de roues à l'aide d'un dispositif de fixation.

Traditionnellement, ce dispositif de fixation est formé par une liaison vissée. Plus particulièrement, l'extrémité de la barre anti-dévers est chauffée et forgée pour être écrasée, pliée puis trouée, afin de recevoir une vis et un écrou. Une biellette est reliée par une première extrémité au système de suspension destiné à être relié à ladite extrémité de la barre anti-dévers. L'extrémité opposée de cette biellette est solidarisée via la vis et l'écrou à ladite extrémité de la barre anti-dévers.

Néanmoins, le procédé de fabrication est exigeant et s'avère difficile à mettre en oeuvre, notamment en ce qui concerne l'obtention d'une telle géométrie des extrémités de barre anti-dévers.

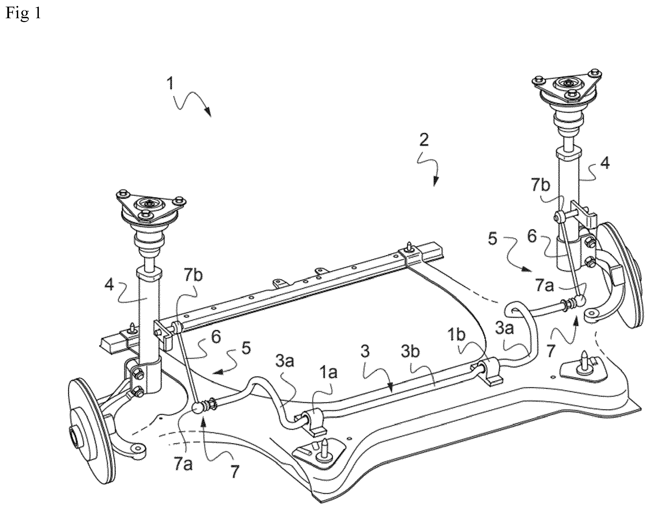

Pour supprimer ces étapes de forgeage difficiles à mettre en oeuvre, un dispositif de fixation selon la figure 1 a été développé.

On a donc représenté sur la figure 1 une vue en perspective partielle d'un véhicule automobile 1 équipé d'un ensemble anti-dévers 2 selon l'art antérieur.

L'ensemble anti-dévers 2 comprend une barre anti-dévers 3, aussi appelée barre antiroulis ou barre de stabilisation. La barre anti-dévers 3 est de façon connue une pièce métallique, par exemple en acier, sensiblement en forme de U et de section circulaire. La barre anti-dévers 3 comprend ainsi deux bras latéraux identiques 3a, et un tronçon central 3b reliant les deux bras latéraux 3a par l'une de leurs extrémités. Chacun des bras latéraux 3a comprend ainsi une extrémité liée au tronçon central 3b et une extrémité libre opposée.

La barre anti-dévers 3 est fixée au châssis du véhicule 1 par des paliers 1a et 1b enserrant partiellement le tronçon central 3b.

Pour un même train de roues avant ou arrière du véhicule 1, Le véhicule 1 comprend un système de suspension 4 associé à chacune des roues. Le véhicule 1 comprend donc un système de suspension 4 pour la roue gauche et un système de suspension 4 pour la roue droite.

Chaque système de suspension 4 est connecté à l'ensemble anti-dévers 2 par l'intermédiaire d'un dispositif de fixation 5 identique.

Par la suite, on ne décrira que l'un des dispositifs de fixation 5, par exemple le dispositif de fixation 5 de la roue gauche, l'ensemble de ce qui sera décrit étant symétrique et identique pour le côté droit.

Le dispositif de fixation 5 comprend une biellette 6 et un moyen de fixation 7 de la biellette à la barre anti-dévers 3.

La biellette 6 est une tige métallique comportant une première extrémité formée par une première rotule 7a et une deuxième extrémité opposée formée par une second rotule 7b. La première rotule 7a relie la biellette 6 à l'ensemble anti-dévers 2, et plus précisément à la barre anti-dévers 3, tandis que la seconde rotule 7b connecte la biellette 6 au système de suspension 4. Les rotules 7a et 7b permettent ainsi à la biellette 6 de façon connue de s'orienter en fonction du mouvement relatif du système de suspension 4 par rapport à la barre anti-dévers 3.

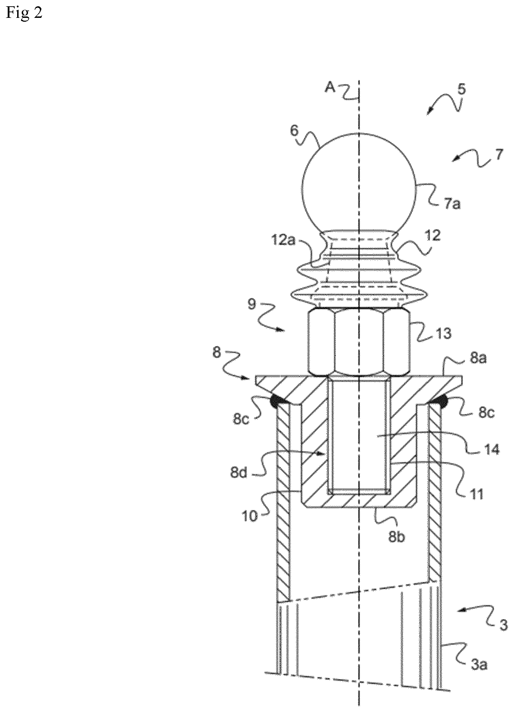

Le moyen de fixation 7 comprend un insert de fixation 8 et un organe de raccord 9 de la biellette à l'insert de fixation illustrés en coupe longitudinale partielle sur la figure 2.

L'insert de fixation 8 comprend une tête d'appui 8a et un corps cylindrique 8b de section sensiblement circulaire et de diamètre constant inférieur au diamètre de la section circulaire de la barre anti-dévers 3. La tête d'appui 8a constitue l'une des extrémités du corps cylindrique 8b et forme une collerette de diamètre supérieur au diamètre respectivement du corps cylindrique 8b et de la section circulaire de la barre anti-dévers 3. Une coupe longitudinale de l'insert de fixation a donc sensiblement en forme de « T ».

L'insert de fixation 8 est ainsi introduit partiellement dans une extrémité de la barre anti-dévers 3. Plus précisément, l'introduction de l'insert de fixation 8 dans l'extrémité de la barre anti-dévers 3 se fait par l'insertion du corps cylindrique 8b dans la barre 3. La tête d'appui 8a bloque l'introduction de l'insert 8 dans la barre 3, et s'appuie contre l'entrée de l'extrémité de la barre anti-dévers 3. En d'autres termes, la tête d'appui 8a est positionné contre l'extrémité de la barre anti-dévers et dans son prolongement axial. Ainsi, l'insert de fixation 8 et l'extrémité de la barre anti-dévers 3 s'étendent selon un même axe A portant le centre de leurs section circulaire respective.

Le diamètre du corps cylindrique 8b est suffisamment inférieur au diamètre de la barre anti-dévers 3 pour qu'aucun contact n'ait lieu entre le corps cylindrique 8b et la barre anti-dévers 3. Le corps cylindrique 8b comprend donc une surface externe 10 en regard des parois internes de l'extrémité de la barre anti-dévers 3. Cette surface externe 10 définit une partie externe 10 de l'insert de fixation 8.

La fixation de l'insert 8 à la barre anti-dévers 3 se fait par une soudure 8c par résistance électrique au niveau du contact entre la tête d'appui 8a de l'insert 8 et l'extrémité de la barre anti-dévers 3, comme illustré sur la figure 2.

L'insert de fixation 8 est borgne. En d'autres termes, une cavité cylindrique 8d est pratiquée dans l'insert 8, cette cavité cylindrique 8d traversant l'insert 8 et débouchant au niveau la tête d'appui 8a sur l'extérieur de l'insert 8. La cavité 8d est en revanche fermée sur son extrémité opposée à la tête d'appui 8a. La cavité 8d constitue donc un logement dont l'accès est constitué par la partie débouchante sur la tête d'appui 8a.

La cavité 8d est cylindrique et est définie par des parois internes 11 de l'insert 8 de section circulaire et dont le centre est porté par l'axe A.

L'insert de fixation 8 comprend donc une partie interne 11 définie par les parois 11 de la cavité 8c, et une partie externe 10 définie par la surface externe 10 du corps cylindrique 8b.

L'organe de raccord 9 est fixé à la première rotule 7a de la biellette 6, et comprend un soufflet de protection 12, un moyen de serrage 13 et un embout fileté 14 alignés selon l'axe A, de sorte que l'organe de raccord 9 s'étend le même axe A que la cavité 8d, l'insert de fixation 8 et l'extrémité de la barre anti-dévers 3.

Le moyen de serrage 13 comprend par exemple une couronne hexagonale destinée à servir de prise à un outil de serrage tel qu'une clé à molette.

Le soufflet de protection 12 est disposé de façon connue autour d'un filet de matière 12a illustré en pointillés sur la figure 2 et reliant le moyen de serrage 13 à la rotule 7a. De cette façon, le soufflet 12 protège la rotule 7a d'un choc avec l'outil de serrage lors du serrage de l'organe de raccord 9, et protège également la rotule 7a d'éventuelles agressions extérieures telles que des liquides, du sable ou de la poussière.

L'embout fileté 14 s'étend depuis une surface du moyen de serrage 13 opposée à la rotule 7a et au soufflet de protection 12.

La dimension radiale du moyen de serrage 13 est supérieure au diamètre de l'embout fileté 14, de sorte que l'utilisation de l'outil de serrage soit facilitée et les risques de détérioration diminués.

La surface interne formant la partie interne 11 de l'insert de fixation 8 est taraudée de sorte que l'embout fileté 14 est configuré pour s'introduire dans la partie interne de l'insert 8 et coopérer avec ledit taraudage. L'organe de raccord 9 est donc configuré pour coopérer avec la partie interne 11 pour solidariser l'insert 8 à la rotule 7a.

La longueur axiale de l'embout fileté 14 est sensiblement égale à la longueur axiale de la partie interne 11 de l'insert de fixation 8. Lorsque la rotule 7a et l'insert 8 sont solidarisés, le moyen de serrage 13 comprend une surface au contact de la tête 8a de l'insert 8.

Ainsi, la rotule 7a de la biellette 6 est fixée à l'ensemble anti-dévers 2, et plus particulièrement à la barre anti-dévers 3 par l'intermédiaire de l'organe de raccord 9 inséré partiellement dans l'insert de fixation 8 qui est solidarisé dans une extrémité libre et creuse d'un bras latéral 3a de la barre anti-dévers 3.

La fixation de l'insert 8 à la barre anti-dévers 3 se fait uniquement par la soudure, de sorte que c'est la soudure qui reprend tous les efforts et moments transmis par le système de suspension 4 et la roue correspondante à l'ensemble anti-dévers 2. Ces efforts et moments résultent de sollicitations alternées de type rotulage, ce qui peut provoquer la casse de la soudure voir de l'insert de fixation 8 et/ou de l'ensemble filetage/taraudage.

De plus, le système de filetage/taraudage entre l'organe de raccord 9 et la partie interne 10 de l'insert de fixation 8 n'est pas suffisamment robuste au regard des sollicitations subies, qui peuvent provoquer une usure et dévissage du fait de leur alternance.

Enfin, le taraudage étant très proche de la zone de soudure, l'échauffement nécessaire à la soudure peut provoquer des modifications des caractéristiques mécaniques du taraudages, résultant en un dysfonctionnement de l'assemblage.

La présente invention a donc pour but d'éviter les inconvénients précités et de proposer un dispositif de fixation d'une extrémité d'une barre anti-dévers d'un véhicule à un système de suspension du véhicule facile à fabriquer, peu coûteux et robuste.

L'invention a donc pour objet un dispositif de fixation d'une extrémité d'une barre anti-dévers d'un véhicule à un système de suspension du véhicule, comprenant une biellette destinée à être connectée au système de suspension et un moyen de fixation de la biellette à la barre anti-dévers, la biellette comportant une extrémité équipée d'une rotule, le moyen de fixation comprenant un organe de raccord fixé à la rotule et un insert de fixation comportant un corps cylindrique s'étendant selon un axe et une tête d'appui formée sur un bout du corps cylindrique, la tête d'appui reposant contre l'extrémité de la barre anti-dévers et le corps étant inséré dans l'extrémité de la barre anti-dévers, l'insert de fixation comprenant une partie interne débouchant sur la tête d'appui et recevant une tige de l'organe de raccord, le corps cylindrique comprenant une partie externe en regard de l'intérieur de la barre anti-dévers.

Dans le dispositif selon l'invention, la partie externe du corps cylindrique comprend au moins une excroissance s'étendant radialement pour être au contact de l'intérieur de la barre anti-dévers.

Ainsi, les sollicitations provenant de la roue et du système de suspension du véhicule ne sont plus transmises uniquement par la soudure, mais également par les excroissances de l'insert de fixation en contact avec la barre anti-dévers, ce qui permet de soulager la soudure.

Avantageusement, la somme des longueurs axiales des au moins une excroissance radiale est inférieure à la moitié de la longueur axiale totale du corps cylindrique.

Ainsi, les efforts nécessaires à l'introduction de l'insert de fixation dans la barre anti-dévers sont réduits, tout en permettant d'améliorer la robustesse du dispositif de fixation pour la reprise des efforts et sollicitations provenant du système de suspension par le contact entre les excroissances et la barre.

Avantageusement, la partie interne comprend une première portion de diamètre D1 et de longueur axiale L1, une deuxième portion de diamètre D2 et de longueur axiale L2, et une troisième portion de diamètre D3 et de longueur axiale L3, la deuxième portion étant axialement positionnée entre la première portion et la troisième portion, la première portion comprenant l'ouverture débouchante de la partie interne sur la tête d'appui, les diamètres des trois portions étant liés par la relation :

$$D3 < D2 < D1$$

Avantageusement, la première portion et la deuxième portion sont lisses, et la troisième portion est partiellement taraudée, le taraudage étant disposé au contact axial de la deuxième portion.

De manière préférentielle, la tige de l'organe de raccord comprend une première fraction de diamètre D4 et de longueur L4 et une deuxième fraction de diamètre D5 et de longueur L5, la première fraction étant disposée entre la tête d'appui et la deuxième fraction, les diamètres des deux portions étant liés par la relation :

$$D5 < D4$$

Avantageusement, la première fraction est lisse, la deuxième portion étant frettée sur la première fraction, la deuxième fraction étant filetée et coopérant avec le taraudage de la troisième portion de l'insert de fixation.

De cette manière, la localisation du filetage et du taraudage permet d'améliorer le bras de levier et d'améliorer la robustesse du dispositif.

Avantageusement, les longueurs axiales L5 et L2 respectives de la deuxième fraction et de la deuxième portions sont reliés par la relation suivante

$$L2 < L5$$

De manière préférentielle, l'organe de raccord comprend un moyen de serrage activable à l'aide d'un outil de serrage, l'organe de raccord comprenant en outre une première et une deuxième embases de protection disposée de part et d'autre axiale et au contact du moyen de serrage, la première embase étant disposée axialement au contact et entre la tige et le moyen de serrage.

Avantageusement, la longueur axiale L4 de la première fraction et les longueurs axiales respectives L1 et L2 des première et deuxième portions sont reliés par la relation suivante :

$$L4 < L1 + L2$$

L'invention a également pour objet un véhicule comprenant un train de roues comportant une première et une deuxième roues, la première roue étant associée à un premier système de suspension et la deuxième roue étant associée à un deuxième système de suspension, les deux systèmes de suspension étant connectés entre eux par l'intermédiaire d'une barre anti-dévers du véhicule, la barre anti-dévers étant fixée aux systèmes de suspension par chacune de ses extrémités au moyen d'un dispositif de fixation tel que défini ci-dessus.

**Brève description des dessins**

D'autres buts, caractéristiques et avantages de l'invention apparaîtront à la lecture de la description suivante, donnée uniquement à titre d'exemple non limitatif, et faite en référence aux dessins annexés sur lesquels :

[Fig1] illustre un dispositif de fixation d'un système de suspension à la barre anti-dévers d'un véhicule selon l'art antérieur ;
[Fig2] illustre une vue en coupe longitudinale du dispositif de fixation de la figure 1 ;
[Fig3] illustre un dispositif de fixation d'un système de suspension à la barre anti-dévers d'un véhicule selon l'invention ; et
[Fig4] illustre une vue en coupe longitudinale d'un dispositif de fixation de la figure 3.

**Exposé détaillé d'au moins un mode de réalisation**

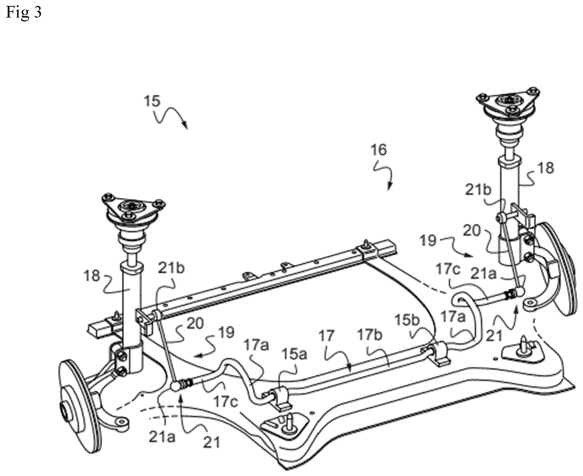

On a donc représenté sur la figure 3 une vue en perspective partielle d'un véhicule automobile 15 équipé d'un ensemble anti-dévers 16 selon l'invention.

L'ensemble anti-dévers 16 comprend une barre anti-dévers 17 métallique, par exemple en acier, sensiblement en forme de U et de section circulaire. La barre anti-dévers 17 comprend ainsi deux bras latéraux identiques 17a, et un tronçon central 17b reliant les deux bras latéraux 17a par l'une de leurs extrémités. Chacun des bras latéraux 17a comprend ainsi une extrémité liée au tronçon central 17b et une extrémité libre creuse opposée 17c, cette extrémité libre 17c correspondant à une extrémité de la barre anti-dévers 17. Chacune des extrémités libres opposées 17c s'étend jusqu'à une tranche 17d formée par une surface latérale et comprenant une entrée donnant accès à l'intérieur de l'extrémité libre, cet intérieur étant formé par une paroi interne 17e.

La barre anti-dévers 17 est fixée au châssis du véhicule 15 par des paliers 15a et 15b enserrant partiellement le tronçon central 17b.

Le véhicule 15 comprend un système de suspension 18 d'un même train de roues avant ou arrière du véhicule 15 associé à chacune des roues. Le véhicule 15 comprend donc un système de suspension 18 pour la roue gauche et un système de suspension 18 pour la roue droite.

Chaque système de suspension 18 est connecté à l'ensemble anti-dévers 16 par l'intermédiaire d'un dispositif de fixation 19. Plus précisément, les dispositifs de fixation 19 permettent chacun de connecter un système de suspension 18 à une extrémité 17c creuse d'un bras latéral 17a de la barre anti-dévers 17.

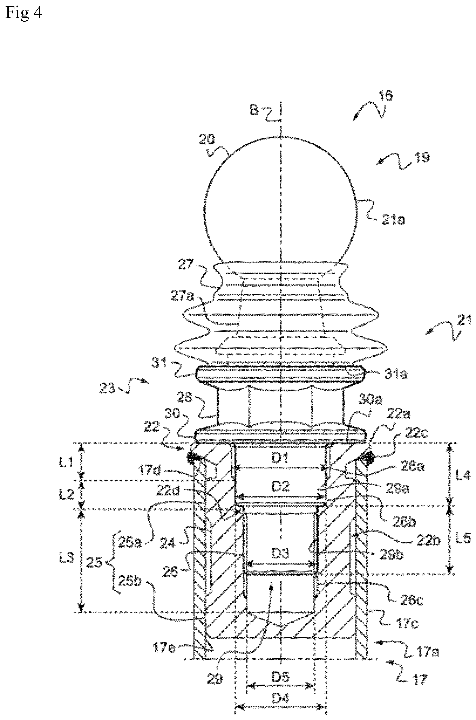

Par la suite, on ne décrira que l'un des dispositifs de fixation 19, par exemple le dispositif de fixation 19 de la roue gauche, l'ensemble de ce qui sera décrit étant symétrique et identique pour le côté droit. Un tel dispositif de fixation 19 est illustré en coupe longitudinale partielle sur la figure 4. L'extrémité libre 17c creuse gauche de la barre anti-dévers 17 est ainsi illustrée sur la figure 4 et s'étend selon un axe B longitudinal. La surface latérale formant la tranche d'extrémité 17d est ainsi orthogonale à l'axe B.

Le dispositif de fixation 19 comprend une biellette 20 et un moyen de fixation 21 de la biellette à la barre anti-dévers 17. Plus précisément, le moyen de fixation 21 est un moyen de fixation de la biellette 20 à l'extrémité creuse 17c d'un bras latéral 17a de la barre anti-dévers 17.

La biellette 20 est une tige métallique comportant une première extrémité formée par une première rotule 21a et une deuxième extrémité opposée formée par une seconde rotule 21b. La première rotule 21a connecte la biellette 20 à la barre anti-dévers 17, et plus précisément à l'extrémité creuse 17c d'un bras latéral 17a de la barre anti-dévers 17, tandis que la seconde rotule 21b connecte la biellette 20 au système de suspension 18. Les rotules 21a et 21b permettent ainsi à la biellette 20 de s'orienter en fonction du mouvement relatif du système de suspension 18 par rapport à la barre anti-dévers 17.

Le moyen de fixation 21 comprend un insert de fixation 22 et un organe de raccord 23 de la biellette à l'insert de fixation illustrés en coupe longitudinale partielle sur la figure 4.

L'insert de fixation 22 comprend une tête d'appui 22a et un corps cylindrique 22b de section sensiblement circulaire et de diamètre inférieur ou égal au diamètre de la section circulaire de la barre anti-dévers 17 défini entre les parois intérieures 17e opposées d'un plan orthogonal à l'axe B de la barre anti-dévers 17. La tête d'appui 22a constitue l'une des extrémités du corps cylindrique 22b et forme une collerette de diamètre supérieur au diamètre respectivement du corps cylindrique 22b et de la section circulaire de la barre anti-dévers 17. Une coupe longitudinale de l'insert de fixation 22 a donc sensiblement une forme de « T ».

L'insert de fixation 22 est ainsi introduit partiellement dans l'extrémité creuse 17c d'un bras latéral 17a de la barre anti-dévers 17. Plus précisément, l'introduction de l'insert de fixation 22 dans l'extrémité 17c de la barre anti-dévers 17 se fait par l'insertion du corps cylindrique 22b dans la barre 17 par la tranche d'extrémité 17d. La tête d'appui 22a bloque l'introduction de l'insert 22 dans la barre 17, et s'appuie contre la tranche 17d de l'extrémité 17c de la barre anti-dévers 17. En d'autres termes, la tête d'appui 22a est positionnée contre la tranche 17d de l'extrémité 17c de la barre anti-dévers 17 et dans son prolongement axial. Ainsi, l'insert de fixation 22 et l'extrémité creuse 17c du bras latéral 17b de la barre anti-dévers 17 s'étendent selon le même axe B portant le centre de leurs section circulaire respective. Le corps cylindrique 22b comprend donc une surface externe 24 en regard de la paroi interne 17e de l'extrémité 17c de la barre anti-dévers 17. Cette surface externe 24 définit une partie externe 24 de l'insert de fixation 22.

La fixation de l'insert 22 à la barre anti-dévers 17 se fait par une soudure 22c par résistance électrique au niveau du contact entre la tête d'appui 22a de l'insert 22 et la tranche 17d de l'extrémité 17c de la barre anti-dévers 17, comme illustré sur la figure 4. La soudure est donc réalisée en des points situés sur une surface de la tête d'appui 22a en regard de l'extrémité 17c de la barre anti-dévers 3, et sur la tranche 17d de l'extrémité 17c.

La partie externe 24 a donc une section circulaire de diamètre inférieur au diamètre de la section circulaire de la barre anti-dévers 17 défini par la paroi intérieure 17e. Toutefois, la partie externe 24 comprend en outre au moins une excroissance radiale 25. L'au moins une excroissance radiale 25 est de préférence annulaire, et s'étend radialement suffisamment pour établir un contact avec la paroi intérieure 17e de la barre anti-dévers 17. L'au moins une excroissance radiale 25 confère donc ponctuellement en sa position axiale au corps cylindrique 22b une section circulaire de diamètre égal au diamètre de la paroi intérieure 17e de la barre anti-dévers 17.

Ainsi, l'au moins une excroissance radiale 25 du corps cylindrique 22b constitue pour l'insert de fixation 22 au moins un point d'appui supplémentaire sur la barre anti-dévers 17, en plus de la soudure. De cette façon, les efforts et moments subis par la barre anti-dévers 17 et transmis par les roues et les systèmes de suspension 18 ne sont plus intégralement repris par la soudure 22c, mais également par les points de la barre 17 en contact de l'au moins une excroissance radiale 25. La soudure 22c est donc ménagée, et le dispositif de fixation 19 gagne en robustesse.

L'au moins une excroissance 25 est positionnée de préférence du côté de la partie externe 24 opposée à la tête d'appui 22a afin d'optimiser l'efficacité du bras de levier.

L'exemple illustré sur la figure 4 comprend une première excroissance 25a et une deuxième excroissance 25b, la première excroissance 25a étant disposée à l'opposé de la tête d'appui 22a, et la deuxième excroissance 25b étant disposée entre la première excroissance 25a et la tête d'appui 22a.

De préférence, la somme des longueurs axiales des au moins une excroissances radiales 25 est inférieure à la moitié de la longueur totale du corps cylindrique 22a. De cette façon, l'insert de fixation 22 est allégé, les efforts nécessaires à l'insertion de l'insert de fixation 22 dans la barre anti-dévers 17 sont réduits tout en garantissant une robustesse améliorée.

Enfin, l'au moins une excroissance 25, c'est-à-dire dans l'exemple illustré les excroissances 25a et 25b, permettent en outre d'assurer un meilleur centrage de l'insert de fixation 22 dans l'extrémité 17c de la barre anti-dévers 17, de façon à garantir le caractère coaxial selon l'axe B des éléments du dispositif de fixation 19 selon l'invention. De cette manière, le centrage de la première rotule 21a est amélioré.

L'insert de fixation 22 est borgne. En d'autres termes, une cavité cylindrique 22d est pratiquée dans l'insert 22, cette cavité cylindrique 22d traversant l'insert 22 et débouchant au niveau de la tête d'appui 22a sur l'extérieur de l'insert 22. La cavité 22d est en revanche fermée sur son extrémité opposée à la tête d'appui 22a. La cavité 22d constitue donc un logement dont l'accès est constitué par une partie débouchante sur la tête d'appui 22a.

La cavité 22d est cylindrique et est définie par une paroi interne 26 de l'insert 22 de section circulaire et dont le centre est porté par l'axe B.

L'insert de fixation 22 comprend donc une partie interne 26 définie par la paroi interne 26 de la cavité 22d, et une partie externe 24 définie par la surface externe 24 du corps cylindrique 22b.

La partie interne 26 comprend une première portion 26a de diamètre D1 et de longueur axiale L1 selon l'axe B, une deuxième portion 26b de diamètre D2 et de longueur axiale L2 selon l'axe B et une troisième portion 26c de diamètre D3 et de longueur axiale L3 selon l'axe B.

La première portion 26a s'étend axialement entre la partie débouchante de la cavité 22d sur la tête d'appui 22a et la deuxième portion 26b, située à une longueur axiale L1 de la partie débouchante de la cavité 22d.

La troisième portion 26c s'étend depuis l'extrémité fermée de la cavité 22d jusqu'à la deuxième portion 26b, située à une longueur axiale L3 de ladite extrémité fermée de la cavité 22d.

La deuxième portion 26b est axialement positionnée et s'étend axialement entre la première portion 26a et la troisième portion 26b.

Les diamètres D1, D2, D3 respectifs des première, deuxième et troisième portions 26a, 26 et 26c sont liés par la relation :

$$D3 < D2 < D1$$

Les premières et deuxièmes portions 26a et 26b ont des parois lisses, tandis que la troisième portion 26c est partiellement taraudée. En effet, la troisième portion 26c comprend un taraudage s'étendant axialement depuis la deuxième portion 26b jusqu'en un point axialement éloigné de la deuxième portion 26b d'une longueur inférieure à L3, la partie restante de la troisième portion 26c comprenant des parois lisses.

L'organe de raccord 23 est fixé à la première rotule 21a de la biellette 20, et comprend un soufflet de protection 27, un moyen de serrage 28 et une tige 29 alignés selon l'axe B, de sorte que l'organe de raccord 23 s'étend le même axe B que la cavité 22d, l'insert de fixation 22 et l'extrémité 17c de la barre anti-dévers 17.

Le moyen de serrage 28 comprend par exemple une couronne hexagonale destinée à servir de prise à un outil de serrage tel qu'une clé à molette.

Le soufflet de protection 27 est disposé de façon connue autour d'un filet de matière 27a illustré en pointillés sur la figure 4 reliant le moyen de serrage 28 à la première rotule 21a. De cette façon, le soufflet 27 protège la rotule 21a d'un choc avec l'outil de serrage lors du serrage de l'organe de raccord 23, et protège également la rotule 21a d'éventuelles agressions extérieures telles que des liquides, du sable ou de la poussière.

L'organe de raccord 23 comprend en outre une première embase 30 et une deuxième embase 31 alignées selon l'axe B avec la tige 29, le moyen de serrage 28, et le soufflet de protection 27 associé au filet de matière 27a.

La première embase 30 est disposée axialement entre et au contact du moyen de serrage 28 et de la tige 29. La deuxième embase 31 est disposée axialement entre et au contact du moyen de serrage 28 et du soufflet de protection 27.

La première embase 30 comprend une surface 30a orthogonale à l'axe B plane reposant contre la tête d'appui 22a, cette surface 30a participant à la transmission des efforts et moments provenant du système de suspension 18 à l'insert 22.

La deuxième embase 31 est symétrique et identique à la première embase par rapport au moyen de serrage 28, la deuxième embase 31 comprenant une surface 31a orthogonale à l'axe B plane au contact du soufflet de protection 27.

Les embases 30 et 31 ont une dimension radiale supérieure au diamètre du moyen de serrage 28, et permettent ainsi de protéger les éléments du dispositif de fixation 19 lors de l'utilisation de l'outil de serrage sur le moyen de serrage 28. En particulier, la première embase 30 protège un revêtement de la barre anti-dévers 17 constitué par une protection organique contre des agressions chimiques et/ou mécaniques provenant du milieu extérieur, telle qu'une protection époxy.

La tige 29 s'étend depuis la surface 30a de la première embase 30, la première embase 30a reposant contre la tête d'appui 22a.

La tige 29 a une section circulaire orthogonale à l'axe B. La tige 29 comprend une première fraction 29a de diamètre D4 et de longueur axiale L4 selon l'axe B, et une deuxième fraction 29b de diamètre D5 et de longueur axiale L5 selon l'axe B.

Les diamètres D4 et D5 respectifs des première et deuxième fractions 29a et 29b sont liés par la relation :

$$D5 < D4$$

La première fraction 29a est disposée axialement entre le moyen de serrage 28 et la deuxième fraction 29b, et plus précisément entre la première embase 30 et la deuxième fraction 29b, la deuxième fraction 29b formant l'extrémité de l'organe de raccord 23 opposée à la tête d'appui 22a.

La première fraction 29a est lisse tandis que la deuxième fraction 29b est filetée.

La tige 29 est configurée pour s'introduire dans la partie interne 26 de l'insert 22 et coopérer avec l'insert de fixation 22. Plus précisément, le diamètre D5 de la deuxième fraction 29b est sensiblement égal au diamètre D3 de la troisième portion 26c. De plus, le filetage de la deuxième fraction 29b est apte à coopérer avec le taraudage de la troisième portion 26c. Ainsi, la deuxième fraction 29b est configurée pour coopérer avec la troisième portion 26c pour la solidarisation de l'insert de fixation 22 avec l'organe de raccord 23.

De plus, la longueur axiale du taraudage de la troisième portion 26c est inférieure à la longueur axiale L3 de cette troisième portion 26c, de sorte que la troisième portion 26c comprend une partie axiale lisse.

En outre, le diamètre D4 de la première fraction 29a est sensiblement égal au diamètre D2 de la deuxième portion 26b, supérieur au diamètre D3, et inférieur au diamètre D1 de la première portion 26a. De la sorte, la deuxième portion 26b est configurée pour être frettée sur la première fraction 29a lors de l'introduction de la tige 29 dans la cavité 26 de l'insert de fixation 22. Ainsi, le taraudage et le filetage sont moins sollicités dans la reprise des efforts et moments extérieurs, de façon à éviter sa casse. La solidarisation de l'insert de fixation 22 à l'organe de raccord 23 se fait donc d'une part par frettage de la deuxième portion 26b sur une partie de la première fraction 29a et d'autre part par coopération des filetage et taraudage respectifs de la deuxième fraction 29b et de la troisième portion 26c. L'appui de la première embase 30 sur la tête d'appui 22a constitue en outre un dernier moyen de solidarisation de l'insert 22 à l'organe de raccord 23, permettant de soulager le filetage/taraudage.

Les longueurs axiales L5 et L2 respectives de la deuxième fraction 29b, de la première et de la deuxième portions 26a et 26b, sont reliés par la relation suivante :

$$L2 < L5$$

De cette façon, lors de l'introduction de la tige 29 de l'organe de raccord 23 dans la cavité 22d de l'insert de fixation 22, le filetage de la deuxième fraction 29b s'engage de quelques pas avec le taraudage de la troisième portion 26c avant que le frettage ne soit possible. De cette manière, une longueur de filetage suffisante est engagée dans le taraudage pour résister à l'effort axial de frettage sans que le filetage-taraudage ne soit endommagé.

De plus, la longueur axiale de la tige 29, égale à la somme de la longueur axiale L4 de la première fraction et de la longueur axiale L5 de la deuxième fraction 29b filetée, est inférieure à la longueur axiale entre l'extrémité de la tête d'appui 22a au contact de la première embase 30 et l'extrémité axiale du taraudage de la troisième portion 26c au contact de la partie axiale lisse de la troisième portion 26c, de sorte que le filetage ne bute pas au fond du taraudage.

Enfin, la longueur axiale L4 de la première fraction 29a et les longueurs axiales respectives L1 et L2 des première et deuxième portions 26a et 26b sont reliés par la relation suivante :

$$L4 < L1 + L2$$

Ainsi, l'organe de raccord 23 et l'insert de fixation 22 sont configurés pour que la première embase 30 soit plaquée contre la tête d'appui 22a avant que la longueur maximale de frettage possible ne soit atteinte, c'est-à-dire avant que la première fraction 29a ne bute contre une surface orthogonale à l'axe B de la troisième portion 26c.

De plus, de ce fait, la zone de la tige 29 comprise entre la première embase 30 et le premier filet du filetage de la deuxième fraction 29b en prise avec le taraudage de la troisième portion 26c constitue une réserve élastique de l'assemblage pour éviter le dévissage lorsque les sollicitations imposées à l'ensemble sont très importantes.

Enfin, la position du filetage-taraudage des deuxième fraction et troisième portion est relativement éloignée du point de soudure, de sorte que l'échauffement nécessaire à la soudure ne risque pas d'endommager le filetage-taraudage.

Dans un autre mode de réalisation, la solidarisation entre l'insert de fixation 22 et l'extrémité 17c de la barre anti-dévers 17 se fait par sertissage entre les surfaces de contact, de manière à éviter la soudure. Par exemple, le sertissage peut se faire par déformation de la barre anti-dévers 17 axialement entre les deux excroissances 25a et 25b.

Encore dans un autre mode de réalisation, le frettage peut être supprimé, sans pour autant modifier les caractéristiques relatives à la longueur L4, de manière à réduire les coûts de fabrication pour les applications ayant un niveau de sollicitations moins élevé.

**Revendications**

1. Dispositif de fixation (19) d'une extrémité (17c) d'une barre anti-dévers (17) d'un véhicule (15) à un système de suspension (18) du véhicule, comprenant une biellette (20) destinée à être connectée au système de suspension (18) et un moyen de fixation (21) de la biellette (20) à la barre anti-dévers (17), la biellette (20) comportant une extrémité équipée d'une rotule (21a), le moyen de fixation (21) comprenant un organe de raccord (23) fixé à la rotule (21a) et un insert de fixation (22) comportant un corps cylindrique (22b) s'étendant selon un axe (B) et une tête d'appui (22a) formée sur un bout du corps cylindrique (22b), la tête d'appui (22a) reposant contre l'extrémité (17c) de la barre anti-dévers (17) et le corps cylindrique (22b) étant inséré dans l'extrémité (17c) de la barre anti-dévers (17), l'insert de fixation (22) comprenant une partie interne (26) débouchant sur la tête d'appui (22a) et recevant une tige (29) de l'organe de raccord (23), le corps cylindrique (22b) comprenant une partie externe (24) en regard de l'intérieur (17e) de la barre anti-dévers (17), **caractérisé en ce que** la partie externe (24) du corps cylindrique (22a) comprend au moins une excroissance (25, 25a, 25b) s'étendant radialement pour être au contact de l'intérieur (17e) de la barre anti-dévers (17).

2. Dispositif de fixation selon la revendication 1, dans lequel la somme des longueurs axiales des au moins une excroissance radiale (25, 25a, 25b) est inférieure à la moitié de la longueur axiale totale du corps cylindrique (25b).

**3.** Dispositif de fixation selon l'une des revendications 1 ou 2, dans lequel la partie interne (26) comprend une première portion (26a) de diamètre D1 et de longueur axiale L1, une deuxième portion (26b) de diamètre D2 et de longueur axiale L2, et une troisième portion (26c) de diamètre D3 et de longueur axiale L3, la deuxième portion (26b) étant axialement positionnée entre la première portion (26a) et la troisième portion (26c), la première portion (26a) comprenant l'ouverture débouchante de la partie interne (26) sur la tête d'appui (22a), les diamètres des trois portions (26a, 26b, 26c) étant liés par la relation :

$$D3 < D2 < D1$$

**4.** Dispositif de fixation selon la revendication 3, dans lequel la première portion (26a) et la deuxième portion (26b) sont lisses, et la troisième portion (26c) est partiellement taraudée, le taraudage étant disposé au contact axial de la deuxième portion (26b).

**5.** Dispositif de fixation selon l'une quelconque des revendications 1 à 4, dans lequel la tige (29) de l'organe de raccord (23) comprend une première fraction (29a) de diamètre D4 et de longueur L4 et une deuxième fraction (29b) de diamètre D5 et de longueur L5, la première fraction (29a) étant disposée entre la tête d'appui (22a) et la deuxième fraction (29b), les diamètres des deux fractions (29a, 29b) étant liés par la relation :

$$D5 < D4$$

**6.** Dispositif selon les revendications 4 et 5, dans lequel la première fraction (29a) est lisse, la deuxième portion (26b) étant frettée sur la première fraction (29a), la deuxième fraction (29b) étant filetée et coopérant avec le taraudage de la troisième portion (26c) de l'insert de fixation (22).

**7.** Dispositif de fixation selon la revendication 6, dans lequel les longueurs axiales L5 et L2 respectives de la deuxième fraction (29b) et de la deuxième portion (26b) sont reliés par la relation suivante :

$$L2 < L5$$

**8.** Dispositif de fixation selon la revendication 7, dans lequel l'organe de raccord (23) comprend un moyen de serrage (28) activable à l'aide d'un outil de serrage, l'organe de raccord (23) comprenant en outre une première et une deuxième embases (30 et 31) de protection disposée de part et d'autre axiale et au contact du moyen de serrage (28), la première embase (30) étant disposée axialement au contact et entre la tige (29) et le moyen de serrage (28).

**9.** Dispositif de fixation selon la revendication 8, dans lequel la longueur axiale L4 de la première fraction (29a) et les longueurs axiales respectives L1 et L2 des première et deuxième portions (26a et 26b) sont reliés par la relation suivante :

$$L4 < L1 + L2$$

**10.** Véhicule (15) comprenant un train de roue comportant une première et une deuxième roues, la première roue étant associé à un premier système de suspension (18) et la deuxième roue étant associée à un deuxième système de suspension (18), les deux systèmes de suspension (18) étant connectés entre eux par l'intermédiaire d'une barre anti-dévers (17) du véhicule (15), la barre anti-dévers (17) étant fixé aux systèmes de suspension (18) en chacune de ses extrémités (17c) par un dispositif de fixation selon l'une quelconque des revendications 1 à 9.

Fig 1

Fig 2

Fig 3

Fig 4

Europäisches
Patentamt

European
Patent Office

Office européen
des brevets

# RAPPORT DE RECHERCHE EUROPEENNE

**Numéro de la demande**

**EP 23 21 8724**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2019 103573 A1 (MUHR & BENDER KG [DE]) 13 août 2020 (2020-08-13) * le document en entier * ----- | 1-10 | INV. B60G21/055 F16C11/06 |
| X | EP 3 552 851 A1 (ENGINEERING DEVELOPMENTS FOR AUTOMOTIVE IND S L [ES]) 16 octobre 2019 (2019-10-16) * le document en entier * ----- | 1,10 | |

**DOMAINES TECHNIQUES RECHERCHES (IPC)**

B60G
F16C

Le présent rapport a été établi pour toutes les revendications

| Lieu de la recherche | Date d'achèvement de la recherche | Examinateur |
|---|---|---|
| La Haye | 28 février 2024 | Savelon, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 21 8724

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-02-2024

| Document brevet cité au rapport de recherche | Date de publication | Membre(s) de la famille de brevet(s) | Date de publication |
|---|---|---|---|
| DE 102019103573 A1 | 13-08-2020 | AUCUN | |
| EP 3552851 A1 | 16-10-2019 | AUCUN | |

EPO FORM P0460